# EUROPÄISCHE PATENTSCHRIFT

(11) **EP 1 369 008 B1**
(45) Veröffentlichungstag und Bekanntmachung des Hinweises auf die Patenterteilung: **28.06.2006**
(21) Anmeldenummer: 03009205.0
(22) Anmeldetag: 23.04.2003
(51) Int. Cl.: A01B 63/16, A01B 63/22

(54) **Landmaschine**
Agricultural machine
Machine agricole

(30) Priorität: 23.05.2002 DE 10222706
(43) Veröffentlichungstag der Anmeldung: 10.12.2003
(73) Patentinhaber: DEERE & COMPANY, Moline, Illinois 61265-8098 (US)
(72) Erfinder: Viaud, Jean, 70100 Gray (FR); Guiet, Lionel, 70100 Gray (FR)
(74) Vertreter: Magin, Ludwig Bernhard

(56) Entgegenhaltungen:
- EP-A- 1 201 470
- DE-A- 3 139 936
- FR-A- 2 725 340
- US-A- 4 176 721
- US-A- 5 337 544

## Beschreibung

Die Erfindung betrifft eine Landmaschine, insbesondere eine Mähmaschine, mit einem Rahmen und Rädern, wobei die Räder mittels jeweils einer Schwinge vertikal schwenkbar an den Rahmen angelenkt sind und die Stellung der Schwinge mittels einer Stellvorrichtung veränderbar ist, die einenends an der Schwinge angreift.

Die Zeitschrift "The Furrow, Ausgabe November 2001, S. 20" zeigt einen Sichelmäher mit mehreren Rädern, die mittels Schwingen an Arme eines Stellrahmens angeschlossen sind. Der Stellrahmen wird mittels eines Hydraulikmotors verstellt, um somit die Arbeitshöhe des Sichelmähers einzustellen. Jede Schwinge ist ungefähr mittig an dem jeweiligen Arm schwenkbar angebracht und trägt an einem Ende ein oder zwei Räder und an dem anderen Ende eine Feder, die sich auf dem Arm abstützt.

Das der Erfindung zugrunde liegende Problem wird darin gesehen, andere Landmaschinen, bei denen eine Stellvorrichtung direkt auf die Schwinge wirkt, ebenfalls auf eine derart einfache Weise zu federn.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bleibt die herkömmliche Bauweise erhalten, bei der sich die Schwinge mittels der Stellvorrichtung an dem Rahmen abstützt; es wird jedoch eine federbeaufschlagbare weitere Schwinge eingefügt, die nur einen minimalen Änderungsaufwand an dem Rahmen hervorruft, während die Stellvorrichtung nur an einer anderen Stelle angeschlossen wird. Zwar wird diese Bauweise vorwiegend an Mähmaschinen - mit oder ohne Konditioniereinrichtung - verwendet; der Einsatz bei Sämaschinen, Bodenbearbeitungsmaschine, Rodern usw. ist aber ebenfalls denkbar.

Als Federn kommen alle gebräuchlichen Bauarten in Betracht, also insbesondere solche aus Gummi, Polyurethan und Metall. Je nach Material und der Anlenkung der Feder an der weiteren Schwinge kann sie auf Druck oder Zug belastet werden. Allerdings sollte ein zu großes Einschwingen vermieden werden, da dies beim Betrieb auf sehr unebenem Boden zu einem unkontrollierten Verhalten der Landmaschine bei schneller Fahrt führen kann.

Eine pneumatische Speicherfeder hat insbesondere den Vorteil, dass ihre Härte und Stellweg einstellbar ist.

Wenn die weitere Schwinge an dem Rahmen festlegbar ist, kann die Federfunktion z. B. beim Betrieb auf dem Feld deaktiviert und bei der schnellen Fahrt auf der Straße zugelassen werden.

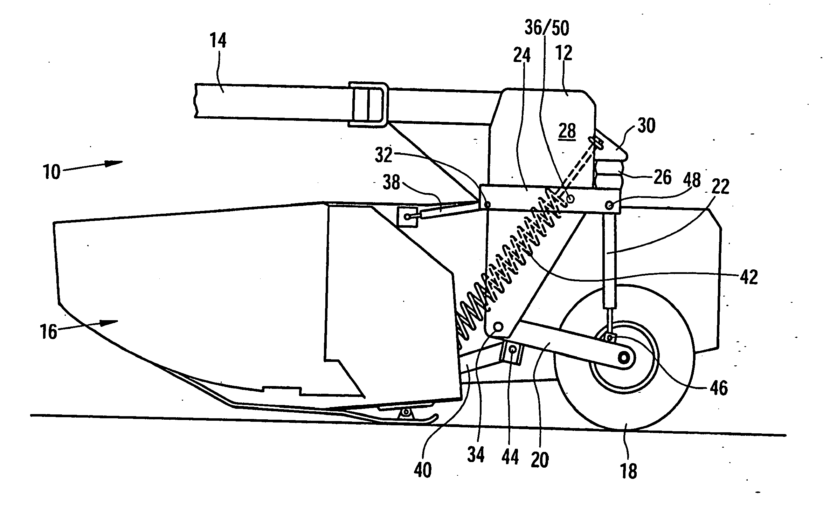

In der einzigen Figur der Zeichnung ist ein nachfolgend näher beschriebenes Ausführungsbeispiel der Erfindung dargestellt.

Eine in der Zeichnung dargestellte Landmaschine 10 enthält einen Rahmen 12, eine Deichsel 14, eine Arbeitseinheit 16, Räder 18, Schwingen 20, Stellvorrichtungen 22, weitere Schwingen 24 und Federn 26.

Die Landmaschine 10 ist als ein sogenannter Mähschlagzetter dargestellt, der also auf dem Boden stehendes Erntegut mäht, aufbereitet und wieder auf den Boden abgibt und dabei hinter einem nicht gezeigten Zugfahrzeug hergezogen wird. Es könnten aber auch andere gezogene und in der Arbeitshöhe verstellbare Landmaschinen 10 verwendet werden.

Der Rahmen 12 hat in Fahrtrichtung gesehen ungefähr die Form eines auf dem Kopf stehenden "U". An der Rückseite jedes seiner Schenkel 28 ist ein Bock 30 angebracht, z. B. angeschweißt, und etwas unterhalb davon befindet sich an seiner Vorderseite ein Gelenk 32. Im unteren Endbereich jedes Schenkels 28 befindet sich ein Lager 34. Zwischen dem Bock 30 und dem Gelenk 32 wird der Schenkel 28 von einer Bohrung 36 durchdrungen.

Die Deichsel 14 dient dem Anschluss des Rahmens 12 an das Zugfahrzeug und ist an die Vorderseite des Rahmens 12 horizontal schwenkbar angebracht, was aber, weil es hinreichend bekannt ist, im einzelnen nicht erläutert wird.

Die Arbeitseinheit 16 wird in dem vorliegenden Ausführungsbeispiel von einer Mäh- und Aufbereitungseinheit gebildet, die mittels oberer und unterer Lenker 38 und 40 an dem Rahmen 12 vertikal schwenkbar angreifen und mittels einer Feder 42 in einer mittleren Lage gehalten werden. Die Arbeitshöhe der Arbeitseinheit 16 wird über die Stellung der Schwingen 20 eingestellt. Auch im übrigen ist diese Arbeitseinheit 16 von bekannter Bauweise.

An jedem Schenkel 28 des Rahmens 12 ist ein Rad 18, eine Schwinge 20, eine Stellvorrichtung 22, eine weitere Schwinge 24 und eine Feder 26 vorgesehen. Die weitere Beschreibung bezieht sich nur auf die linke und in der Zeichnung sichtbare Seite der Landmaschine 10.

Jedes Rad 18 befindet sich im rückwärtigen Bereich der Arbeitseinheit 16 und wird von der jeweiligen Schwinge 20 drehbar aufgenommen.

Die Schwinge 20 trägt an ihrem rückwärtigen Endbereich drehbar das Rad 18 und ist mit ihrem vorderen Endbereich vertikal schwenkbar in dem Lager 34 des Schenkels 28 aufgenommen. An der Unterseite der Schwinge 20 ist in ihrem vorderen Endbereich ein Lager 44 für den Anschluss des unteren Lenkers 40 vorgesehen. Auf der Oberseite der Schwinge 20 ist nahe ihres rückwärtigen Endbereichs ein Lager 46 für den Anschluss der Stellvorrichtung 22 angebracht.

Die Stellvorrichtung 22 wird bei diesem Ausführungsbeispiel von einem im Wesentlichen vertikal verlaufenden Hydraulikmotor mit Kolben und Zylinder gebildet, der am unteren Ende in dem Lager 46 an der Schwinge 20 angreift. Eine Verstellung der Länge der Stellvorrichtung 22 bewirkt eine Veränderung der Arbeitshöhe der Landmaschine 10.

Die weitere oder obere Schwinge 24 ist ungefähr U-förmig ausgebildet und übergreift gabelförmig den Schenkel 28 in waagrechter Richtung. Der vordere Endbereich ist gemeinsam mit dem oberen Lenker 38 in dem Gelenk 32 vertikal schwenkbar angeschlossen. Der rückwärtige Endbereich ist in einem Lager 48 mit dem oberen Endbereich der Stellvorrichtung 22 gelenkig verbunden. Zwischen dem Gelenk 32 und dem Lager 48 weist die Schwinge 24 eine Bohrung 50 auf, die in Deckung gebracht werden kann mit der Bohrung 36 in dem Schenkel 28.

Die Feder 26 ist in dem bevorzugten Ausführungsbeispiel aus Polyurethan hergestellt und zu einem Block geformt, in den eine nicht sichtbare Gewindehülse integriert ist. Die Feder 26 liegt mit ihrer Oberseite an der Unterseite des Bocks 30 an und ist an diesen mittels einer in die Gewindehülse eingesetzten Schraube gesichert. An die Unterseite der Feder 26 legt sich die Oberseite der weiteren Schwinge 24 an. Die Feder 26 dient als Dämpfungsglied oder Stoßdämpfer, um den Rahmen 12 und die Landmaschine 10 vor Stößen zu schützen.

Durch die Bohrungen 36 und 50 kann bei entsprechender Deckung ein nicht gezeigter Bolzen gesteckt werden.

Nach alledem kann die weitere Schwinge 24 um das Gelenk 32 vertikal gegen die Kraft der Feder 26 schwenken, so dass eventuell über das Rad 18, die Schwinge 20 und die Stellvorrichtung 22 übertragene Stöße von der Feder 26 gemildert werden können.

Soll die Federungsfunktion nicht aktiviert sein, wird der genannte Bolzen durch die Bohrungen 36 und 50 gesteckt, so dass die weitere Schwinge 24 nicht mehr schwenken kann.

## Patentansprüche

1. Landmaschine (10), insbesondere Mähmaschine, mit einem Rahmen (12) und Rädern (18), wobei die Räder (18) mittels jeweils einer Schwinge (20) vertikal schwenkbar an den Rahmen (12) angelenkt sind und die Stellung der Schwinge (20) mittels einer Stellvorrichtung (22) veränderbar ist, die einenends an der Schwinge (20) angreift, **gekennzeichnet durch** wenigstens eine Feder (26), die an dem Rahmen (12) angebracht ist, und **durch** eine weitere Schwinge (24), die vertikal schwenkbar an den Rahmen (12) angebracht ist, mit dem anderen Endbereich der Stellvorrichtung (22) verbunden ist und an der Feder (26) zur Anlage bringbar ist.

2. Landmaschine nach Anspruch 1, **dadurch gekennzeichnet, dass** die Feder (26) aus Gummi, Polyurethan oder Metall gebildet ist.

3. Landmaschine nach Anspruch 1, **dadurch gekennzeichnet, dass** die Feder (26) als eine pneumatische Speicherfeder ausgebildet ist.

4. Landmaschine nach einem oder mehreren der vorherigen Ansprüche, **dadurch gekennzeichnet, dass** die weitere Schwinge (24) an dem Rahmen (12) festlegbar ist.

## Claims

1. Agricultural machine (10), in particular mowing machine, having a frame (12) and wheels (18), the wheels (18) being articulated vertically pivotably on the frame (12) by means of a link (20) respectively and the position of the link (20) being able to be changed by means of an adjustment device (22) which engages at one end on the link (20), **characterised by** at least one spring (26) which is mounted on the frame (12) and by a further link (24) which is mounted vertically pivotably on the frame (12), is connected to the other end region of the adjustment device (22) and can be brought into abutment on the spring (26).

2. Agricultural machine according to claim 1, **characterised in that** the spring (26) is formed from rubber, polyurethane or metal.

3. Agricultural machine according to claim 1, **characterised in that** the spring (26) is configured as a pneumatic pre-loaded spring.

4. Agricultural machine according to one or more of the preceding claims, **characterised in that** the further link (24) can be secured on the frame (12).

## Revendications

1. Machine agricole (10), en particulier faucheuse, comportant un châssis (12) et des roues (18), les roues (18) étant articulées chacune contre le châssis (12) de manière pivotante dans le sens vertical au moyen d'un bras oscillant (20) et la position du bras oscillant (20) pouvant être réglée au moyen d'un dispositif de positionnement (22) dont une extrémité entre en contact avec le bras oscillant (20), **caractérisée par** au moins un ressort (26), qui est monté sur le châssis (12), et par un autre bras oscillant (24), qui est monté sur le châssis (12) de manière pivotante dans le sens vertical, et relié à l'autre extrémité du dispositif de positionnement (22) et pouvant être amené en appui sur le ressort (26).

2. Machine agricole selon la revendication 1, **caractérisée en ce que** le ressort (26) est réalisé en caoutchouc, polyuréthanne ou métal.

3. Machine agricole selon la revendication 1, **caractérisée en ce que** le ressort (26) est conçu sous forme de ressort à accumulateur pneumatique.

4. Machine agricole selon une ou plusieurs des revendications précédentes, **caractérisée en ce que** l'autre bras oscillant (24) peut être fixé contre le châssis (12).
